# FASCICULE DE BREVET EUROPEEN

(11) **EP 2 829 205 B1**
(45) Date de publication et mention de la délivrance du brevet: **03.07.2019**
(21) Numéro de dépôt: 13178183.3
(22) Date de dépôt: 26.07.2013
(51) Int. Cl.: A47J 27/05, F16J 15/06

(54) **Organe de jonction destiné à relier un premier plat de cuisson et un second plat de cuisson**
Verbindungsorgan zum Verbinden eines ersten Kochtopfs mit einem zweiten Kochtopf
Joining member for connecting a first baking dish and a second baking dish

(43) Date de publication de la demande: 28.01.2015
(73) Titulaire: Meledo, Hervé, 44240 Sucé sur Erdre (FR)
(72) Inventeur: Meledo, Hervé, 44240 Sucé sur Erdre (FR)
(74) Mandataire: Icosa

(56) Documents cités:
- FR-A1- 2 719 882
- FR-A1- 2 955 760
- US-A1- 2003 167 932

## Description

### DOMAINE DE L'INVENTION

La présente invention concerne un organe de jonction destiné à relier un premier plat de cuisson et un second plat de cuisson. Cet organe de jonction comprend notamment un moyen de préhension permettant de soulever et de désolidariser, en toute sécurité, ledit second plat dudit premier plat. L'invention concerne en outre un récipient de cuisson comprenant un tel organe de jonction.

### ÉTAT DE LA TECHNIQUE

Une cuisson à la vapeur ou confinée nécessite d'utiliser une enceinte de cuisson comportant un plat de réception des aliments, aussi appelé réceptacle, et un couvercle adapté pour refermer le plat. Or les plats du commerce, notamment les plats adaptés à la cuisson dans un four, sont rarement dotés d'un couvercle. Une solution consiste alors à superposer bord à bord deux plats ayant des bords similaires de sorte à réaliser une enceinte fermée. Toutefois la manipulation d'un tel ensemble résultant de la simple superposition des plats est délicate : les plats peuvent glisser l'un sur l'autre ou encore tomber sur le sol et se briser. De plus, lorsque l'utilisateur manipule les plats chauds et que le couvercle s'écarte du réceptacle, le couvercle ou la vapeur d'eau qui s'échappe de l'enceinte peut brûler l'utilisateur.

On connaît dans l'état de la technique un dispositif de liaison permettant de maintenir en place un plat formant couvercle sur un plat formant réceptacle. Le brevet FR 10 50787 présente ainsi un dispositif de jonction bord à bord permettant de relier deux plats.

Lorsque l'utilisateur veut rajouter des ingrédients, goûter ou remuer la préparation, ou bien effectuer toute autre opération courante dans l'élaboration d'un plat cuisiné, il doit saisir le couvercle. Cependant, les dispositifs existants ne permettent pas une saisie du couvercle efficace et en toute sécurité ; en effet :
- si le plat servant de couvercle n'est pas muni d'oreilles de préhension, cette opération est impossible et le récipient de cuisson comprenant le dispositif de liaison peut être utilisé en toute sécurité uniquement à froid, limitant ainsi grandement l'utilité du dispositif de liaison,
- si le plat servant de couvercle est muni d'oreilles de préhension, l'utilisateur peut se saisir du couvercle. Cependant dans ce cas précis, la température élevée des oreilles de préhension empêchera l'utilisateur de manipuler le plat servant de couvercle en toute sécurité. De plus le plat servant de couvercle va alors se désolidariser du dispositif de jonction de sorte que le dispositif de jonction et le couvercle doivent être manipulés séparément. Alternativement, le dispositif de jonction est susceptible d'être emmené involontairement avec le plat formant couvercle puis ensuite de chuter librement,
- si les deux plats -celui formant couvercle et celui formant réceptacle- sont munis d'oreilles de préhension, les oreilles de préhension sont proches, accolées ou jointives et la saisie en toute sécurité du couvercle est impossible.

Un autre problème technique bien connu des utilisateurs de ce type de récipient repose sur la présence et l'écoulement de condensation, qui peuvent s'avérer dangereux lors de la manipulation dudit récipient de cuisson. En effet lorsque les deux plats, celui formant réceptacle et celui formant couvercle sont positionnés bords à bords, sans organe de jonction, l'écoulement de condensation à l'intérieur des parois latérales du plat formant couvercle peut se prolonger à l'extérieur des parois latérales du plat formant réceptacle et ainsi brûler l'utilisateur.

L'utilisation de dispositifs de liaison, tels que ceux connus dans l'état de l'art, ne permet pas d'assurer une sécurité optimale lors de l'écoulement de la condensation.

Un des objets de la présente invention consiste à pallier au moins aux inconvénients précités. À cet effet, la présente invention propose un organe de jonction pour relier un premier plat de cuisson et un second plat de cuisson, ledit organe de jonction comprenant au moins une portion de préhension. L'organe de jonction est également conçu pour assurer un écoulement de la condensation à l'intérieur des premier et second plats de cuisson et pour éviter l'accumulation de condensation au niveau dudit organe de jonction.

### DÉFINITIONS

Dans la présente invention, les termes ci-dessous sont définis de la manière suivante :
« **Plat** » concerne une pièce de vaisselle à fond plat pouvant servir, au sens de la présente invention, de réceptacle ou de couvercle. Les termes premier plat de cuisson ou plat servant de réceptacle ou plat formant réceptacle d'une part et les termes second plat de cuisson ou plat servant de couvercle ou plat formant couvercle d'autre part ne servent qu'à la compréhension de l'invention et sont interchangeables puisque les deux plats ont des bords similaires.

« **Bords similaires** » signifie que les plats ont des bords sensiblement identiques. Ainsi, au sens de la présente invention, deux plats identiques ou deux plats de même forme mais de dimensions légèrement différentes peuvent être utilisés.

« **Oreille de préhension** » concerne tout dispositif permettant de saisir un plat, tel que par exemple une poignée en saillie.

« **Moyen ou portion de préhension** » concerne un dispositif permettant à l'utilisateur de saisir, en toute sécurité, l'organe de jonction et d'emporter simultanément le second plat de cuisson.

« **Désolidariser** » signifie mettre fin au contact entre les différentes parties en jeu. Au sens de la présente invention, désolidariser le premier plat de cuisson du second plat de cuisson signifie que le second plat de cuisson n'est plus en contact (soit directement, soit indirectement par le biais de l'organe de jonction) avec le premier plat de cuisson.

« **En surplomb de** » signifie que le second plat de cuisson se positionne au-dessus du premier plat, les deux plats étant, ou non, en contact.

« **Ergot** » désigne une saillie à la surface d'un objet manufacturé qui sert d'arrêt ou de butée. Au sens de la présente invention, l'ergot sert de butée au bord du second plat de cuisson de manière à le surélever par rapport à l'organe de jonction et donc également par rapport au premier plat de cuisson.

### RÉSUMÉ

L'invention concerne donc un organe de jonction pour relier un premier plat de cuisson et un second plat de cuisson, ledit organe de jonction comprenant au moins une portion de préhension.

### Structure

L'invention concerne un organe de jonction pour relier un premier plat de cuisson et un second plat de cuisson présentant chacun un bord, chacun des premier et second plats de cuisson comprenant une paroi de fond, sensiblement horizontale, et une paroi latérale, sensiblement verticale, s'étendant depuis la paroi de fond jusqu'au bord ; le premier plat de cuisson présentant 0, 1 ou 2 oreilles de préhension et le second plat de cuisson présentant 1 ou 2 oreilles de préhension,
ledit organe de jonction comprenant :
- un anneau de liaison conformé pour positionner le bord du second plat de cuisson en surplomb du bord du premier plat de cuisson, et
- au moins une portion de préhension s'étendant en saillie depuis l'anneau de liaison,
ledit anneau de liaison comprenant :
- une première portion d'extrémité basse conformée pour s'étendre à l'intérieur de la paroi latérale du premier plat de cuisson,
- une seconde portion d'extrémité haute conformée pour s'étendre à l'extérieur de la paroi latérale du second plat de cuisson, et
- une portion centrale reliant les première et seconde portions d'extrémité et agencée pour être positionner entre les bords des premier et second plats de cuisson,
ladite au moins une portion de préhension de l'organe de jonction s'étendant transversalement depuis la deuxième portion d'extrémité haute et dans le prolongement de ladite deuxième portion d'extrémité haute et ladite au moins une portion de préhension est conformée pour coopérer par complémentarité de forme avec au moins une oreille de préhension du second plat de cuisson.

Selon l'invention, la première portion d'extrémité basse correspond à la portion de l'organe de jonction qui va se positionner, lors de l'utilisation, à l'intérieur et le long de la paroi latérale du premier plat de cuisson ; la portion centrale correspond à la portion de l'organe de jonction qui va se positionner, lors de l'utilisation, entre les premier et second plats de cuisson ; et la seconde portion d'extrémité haute correspond à la portion de l'organe de jonction qui va se positionner, lors de l'utilisation, à l'extérieur et le long de la paroi latérale du second plat de cuisson.

### Plats

Selon l'invention, le second plat de cuisson est posé retourné sur l'organe de jonction placé préalablement sur le premier plat de cuisson.

Selon un mode de réalisation, le premier plat de cuisson et le second plat de cuisson sont in terchangeables.

Selon un mode de réalisation, le premier et le second plat de cuisson présentent des dimensions similaires ou légèrement différentes.

Selon un mode de réalisation, le premier et le second plat de cuisson sont identiques.

Selon un mode de réalisation, le premier plat de cuisson et le second plat de cuisson sont en verre transparent ou non ; en métal ou en alliage métallique, notamment en acier inoxydable ou en fonte, ou en céramique, notamment en porcelaine.

Selon un mode de réalisation, le premier plat de cuisson ne comprend pas d'oreille ou comprend au moins une, de préférence deux, oreille(s) de préhension.

Selon un mode de réalisation, le second plat de cuisson comprend au moins une, de préférence deux, oreille(s) de préhension.

Selon un mode de réalisation ne faisant pas partie de l'invention, le second plat de cuisson ne comprend pas d'oreille de préhension.

Selon un mode de réalisation, le second plat de cuisson comprend au moins une, de préférence deux oreille(s) de préhension s'étendant transversalement à partir du bord du second plat de cuisson et le premier plat de cuisson comprend au moins une, de préférence deux oreille(s) de préhension s'étendant transversalement à partir du bord du premier plat de cuisson.

Selon un mode de réalisation, le second plat de cuisson comprend au moins une, de préférence deux oreille(s) de préhension s'étendant transversalement à partir du bord ou de la paroi latérale du second plat de cuisson et le premier plat de cuisson comprend au moins une, de préférence deux oreille(s) de préhension s'étendant transversalement à partir du bord ou de la paroi latérale du premier plat de cuisson.

### Anneau de liaison - Forme annulaire

Selon un premier mode de réalisation, l'anneau de liaison de l'organe de jonction est de forme générale annulaire. Selon un second mode de réalisation, l'anneau de liaison est de forme générale circulaire. Selon un troisième mode de réalisation, l'anneau de liaison est de forme générale rectangulaire, à angles arrondis. Selon un autre mode de réalisation, la forme de l'anneau de liaison est telle que ledit anneau de liaison puisse être utilisé avec tous les plats connus de l'homme du métier.

### Portion de préhension - Localisation

La au moins une portion de préhension de l'organe de jonction s'étend transversalement depuis la deuxième portion d'extrémité haute et dans le prolongement de la deuxième portion d'extrémité haute. Ladite au moins une portion de préhension est située au niveau supérieur de la deuxième portion d'extrémité haute.

### Portion de préhension - Conformation

Selon un mode de réalisation, ladite au moins une portion de préhension de l'organe de jonction est conformée de sorte que la prise de ladite au moins une portion de préhension de l'organe de jonction emporte simultanément le second plat de cuisson.

Selon un mode de réalisation ne faisant pas partie de l'invention, ladite au moins une portion de préhension de l'organe de jonction est conformée de sorte qu'en l'absence d'oreille de préhension du second plat de cuisson la prise de ladite au moins une portion de préhension de l'organe de jonction emporte simultanément le second plat de cuisson.

Selon un mode de réalisation, ladite au moins une portion de préhension de l'organe de jonction est conformée pour recevoir au moins une oreille de préhension liée à un bord du second plat de cuisson, de sorte que la prise de ladite au moins une portion de préhension de l'organe de jonction emporte simultanément le second plat de cuisson. Cette configuration permet un parfait maintien du second plat de cuisson vis-à-vis de l'organe de jonction au cours de la saisie de la au moins une portion de préhension de l'organe de jonction. Il est ainsi facile de retirer le second plat en saisissant la au moins une portion de préhension de l'organe de jonction.

Selon la présente invention, ladite au moins une portion de préhension est conformée pour coopérer par complémentarité de forme avec au moins une oreille de préhension liée à un bord du second plat de cuisson, de sorte que ladite au moins une portion de préhension de l'organe de jonction stabilise ladite au moins une oreille de préhension liée à un bord du second plat de cuisson ainsi que le second plat de cuisson.

### Portion de préhension - Fonctions

La au moins une portion de préhension est donc conformée pour remplir deux fonctions : une première fonction de préhension, et une seconde fonction de logement de l'oreille de préhension du second plat de cuisson.

Avantageusement, la au moins une portion de préhension participe en outre à la stabilité du second plat de cuisson vis à vis du premier plat de cuisson puisque le bord du second plat est retenu et soutenu par l'anneau de liaison et par la au moins une portion de préhension. De ce fait, le soulèvement de la au moins une portion de préhension de l'organe de jonction emporte simultanément le second plat de cuisson.

En outre, l'organe de jonction facilite la manipulation d'un second plat posé retourné en surplomb d'un premier plat à la fois lorsque le second plat ne comporte pas d'oreilles de préhension mais aussi lorsque le second plat comporte des oreilles de préhension de tailles similaires ou inférieures à celles des moyens de préhension.

### Portion de préhension - Universalité

Ainsi ladite au moins une portion de préhension peut s'adapter à la prise de plats sans oreilles, à la prise de plats avec des oreilles de préhension de dimensions similaires à celle des portions de préhension, comme à la prise de plats avec des oreilles de préhension aux dimensions inférieures à celle des portions de préhension.

Avantageusement, l'organe de jonction est universel en ce qu'il peut être utilisé avec beaucoup de dimensions d'oreille de préhension de plats, allant de tailles similaires à des tailles inférieures à celles de la au moins une portion de préhension de l'organe de jonction. Et bien entendu, l'organe de jonction peut également être utilisé avec des plats ne comportant pas d'oreilles de préhension.

Selon un mode de réalisation, la taille de la au moins une portion de préhension de l'organe de jonction est dimensionnée pour recevoir toute oreille de jonction des plats du commerce. En d'autres termes, l'organe de jonction est avantageusement dimensionné pour recevoir les oreilles de préhension des plats commercialement disponibles. Ainsi ladite au moins une portion de préhension a une dimension supérieure aux extrémités latérales du couvercle (oreille de préhension comprise), selon le plus grand axe de l'organe de jonction, de l'ordre de 1 à 40 millimètres, de préférence de 15 à 20 millimètres.

Dans un mode de réalisation, la taille de la au moins une portion de préhension de l'organe de jonction peut être variable afin de recevoir préférentiellement tous les plats avec de grandes poignées ou encore tous les plats avec de petites poignées voire tous les plats sans poignées.

### Portion de préhension - Rebord

Selon un mode de réalisation, ladite au moins une portion de préhension comprend au moins un rebord. Ce rebord entoure au moins une oreille de préhension et a une fonction de stabilisation et/ou de centrage du second plat vis-à-vis de l'organe de jonction.

Selon un mode de réalisation, ladite au moins une portion de préhension de l'organe de jonction comprend un rebord qui définit en son centre un logement. Dans ce mode de réalisation, ce logement est dimensionné pour recevoir et stabiliser et/ou centrer au moins une oreille de préhension liée à un bord du second plat de cuisson.

Selon un mode de réalisation, ce rebord est positionné dans le prolongement de la deuxième portion d'extrémité haute, au niveau supérieur.

Selon un mode de réalisation, le rebord et le logement coopèrent pour maintenir la au moins une oreille de préhension du second plat de cuisson de façon stable dans au moins une portion de préhension de l'organe de jonction.

### Organe de jonction - Surélévation

Selon un mode de réalisation, l'anneau de liaison est conformé pour surélever le bord du second plat de cuisson par rapport au bord du premier plat de cuisson. Ainsi, de par les dimensions de l'anneau de liaison les bords des premier et second plats de cuisson sont espacés. Cet espacement permet de saisir plus facilement la au moins une portion de préhension, notamment lorsque le premier plat comprend une oreille de préhension en regard de l'oreille du second plat, et a fortiori lorsque le second plat ne contient pas d'oreille de préhension. De plus, la surélévation permet de gagner en capacité de cuisson du récipient formé par les premier et second plats de cuisson.

Cette surélévation s'étend verticalement (dans l'axe vertical des parois latérales desdits premier et second plats) sur une dimension comprise entre 1 et 100 millimètres, de préférence entre 2 et 50 millimètres, plus préférentiellement entre 4 et 20 millimètres.

Dans un mode de réalisation, la surélévation du second plat par rapport au premier peut être obtenue par des ergots aménagés le long de l'anneau de liaison. De préférence, 2 ergots sont réalisés à proximité de chaque portion de préhension. De préférence, lesdits ergots s'étendent verticalement à partir de la portion centrale de l'anneau de liaison, le long de la deuxième portion d'extrémité haute. Dans un mode de réalisation où l'anneau de liaison est de forme générale rectangulaire, lesdits ergots sont répartis à proximité des coins de l'anneau, de préférence le long des grands côtés de l'anneau de liaison. De préférence, lesdites ergots sont ponctuels, arrondis, orientés vers l'intérieur de l'anneau de liaison et s'étendent verticalement à partir de la portion centrale de l'anneau de liaison le long de la deuxième portion d'extrémité haute.

Selon un mode de réalisation, les ergots sont fabriqués par moulage, injection, injection-moulage, extrusion, emboutissage ou toute autre technique connue de l'homme du métier.

Dans un mode de réalisation ne faisant pas partie de l'invention, en l'absence d'oreille de préhension, le bord inférieur du second plat repose sur l'organe de jonction.

Dans un mode de réalisation ne faisant pas partie de l'invention, en l'absence d'oreille de préhension, le bord inférieur du second plat de cuisson repose sur au moins un ergot aménagé le long de l'anneau de liaison, de préférence le bord inférieur du second plat de cuisson repose sur 4 ergots aménagés le long de l'anneau de liaison.

Dans un mode de réalisation, en présence d'oreille de préhension, le bord inférieur du second plat de cuisson repose sur l'organe de jonction, possiblement sur les ergots, et les oreilles de préhension se logent et reposent dans les portions de préhension.

### Organe de jonction - deux portions de préhension en regard

De préférence, l'organe de jonction comprend deux portions de préhension de préférence situées de part et d'autre de l'organe de jonction, en regard.

### Organe de jonction - description et dimensions de la portion centrale

Selon un mode de réalisation, la portion centrale de l'organe de jonction s'étend radialement sur une dimension comprise entre un millimètre et quelques centimètres, entre les première et seconde portions d'extrémité de sorte notamment à pouvoir maintenir en place un second plat posé retourné au-dessus d'un premier plat dont les parois de fond et/ou les parois latérales et/ou les bords ne présentent pas exactement les mêmes dimensions. Selon un mode de réalisation, la portion centrale de l'organe de jonction s'étend radialement sur une dimension comprise entre un millimètre et quelques centimètres, entre les première et seconde portions d'extrémité de sorte notamment à pouvoir positionner au moins un ergot.

### Organe de jonction - monobloc - matériaux

Selon un mode de réalisation, l'organe de jonction est monobloc. Il peut être fabriqué par moulage, injection, injection-moulage, extrusion, emboutissage ou toute autre technique connue de l'homme du métier. Selon un mode de réalisation, l'organe de jonction est réalisé en plastique alimentaire, en métal, en alliage métallique ou en céramique. De préférence, l'organe de jonction est en acier inoxydable.

Selon un mode de réalisation, ladite première portion d'extrémité basse, ladite seconde portion d'extrémité haute, ladite portion centrale et ladite au moins une portion de préhension sont connectés de façon à former une pièce rigide monobloc.

Selon un mode de réalisation, l'organe de jonction est destiné à relier un premier plat de cuisson et un second plat de cuisson, notamment pour des cuissons sur tout moyen de cuisson y compris brûleur gaz ou plaque de cuisson notamment électrique, vitrocéramique ou induction, ou enceinte de cuisson y compris fours, notamment fours à infra-rouge.

Selon un mode de réalisation, l'anneau de liaison est monobloc et formé à partir d'un métal ou d'un alliage métallique.

Selon un mode de réalisation, l'organe de jonction est monobloc et formé à partir d'un métal ou d'un alliage métallique.

Selon un mode de réalisation, l'anneau de liaison est monobloc et formé à partir d'un matériau plastique, polymère ou composition adapté à toutes températures de cuisson, de préférence, adapté à subir des températures allant jusqu'à 250°C.

Selon un mode de réalisation, l'anneau de liaison et la au moins une portion de préhension sont composés à partir du même matériau.

Selon un autre mode de réalisation, l'anneau de liaison et la au moins une portion de préhension sont composés de matériaux différents.

### Anneau de liaison/portion de préhension - Fonction : éviter l'écoulement de la condensation

Suivant un mode de réalisation, la disposition de l'anneau de liaison avec une première portion d'extrémité basse conformée pour s'étendre à l'intérieur de la paroi latérale du premier plat et une seconde portion d'extrémité haute conformée pour s'étendre à l'extérieur de la paroi latérale du second plat de cuisson est telle qu'elle permet d'éviter tout écoulement de condensation à l'extérieur des plats.

Cette disposition permet à la condensation qui s'écoulerait le long du plat formant couvercle de s'écouler ensuite le long de la paroi intérieure du plat formant réceptacle et non le long de la paroi extérieure.

Dans un mode de réalisation, la portion centrale de l'anneau est inclinée vers le bas et l'intérieur de l'organe de jonction de façon à éviter la stagnation de condensation au niveau de l'anneau de liaison. De préférence, ladite inclinaison est comprise entre 0 et 45 degrés, préférentiellement entre 0 et 30 degrés, encore plus préférentiellement entre 0 et 5 degrés. Ainsi les gouttes de condensation qui s'écoulent depuis les parois intérieures latérales du second plat de cuisson et qui se retrouvent au niveau de la portion centrale de l'anneau de liaison tombent plus facilement dans le premier plat de cuisson.

Dans un mode de réalisation, l'organe de jonction comprend des portions de préhension qui séparent et espacent le plat formant couvercle de la portion centrale de l'anneau de liaison, ainsi le bord du second plat de cuisson ne repose plus entièrement sur le pourtour de la portion centrale de l'anneau de liaison ; ce qui évite l'accumulation de condensation à cet endroit par capillarité.

Dans un mode de réalisation, l'anneau de liaison comprend des ergots qui séparent et espacent le plat formant couvercle de la portion centrale de l'anneau de liaison, ainsi le bord du second plat de cuisson ne repose plus entièrement sur le pourtour de la portion centrale de l'anneau de liaison ; ce qui évite l'accumulation de condensation à cet endroit par capillarité.

Dans un mode de réalisation, l'anneau de liaison, notamment la portion centrale et la présence d'ergot, permet d'éviter les interactions par capillarité.

Avantageusement, la au moins une portion de préhension comprend un rebord définissant un logement creux, muni de pente ou non, qui évite l'écoulement de condensation à l'extérieur des plats.

Dans un mode de réalisation, la au moins une portion de préhension est inclinée vers le bas et l'intérieur de l'organe de jonction de façon à éviter la stagnation de condensation au niveau de ladite portion de préhension. De préférence, ladite inclinaison est comprise entre 0 et 45 degrés, préférentiellement entre 0 et 30 degrés, encore plus préférentiellement entre 0 et 5 degrés.

Dans un mode de réalisation, le positionnement de la au moins une portion de préhension permet d'éviter la formation de condensation au niveau de ladite au moins une portion de préhension.

Dans un mode de réalisation, le bord intérieur de la au moins une portion de préhension est excentré par rapport au bord du second plat de cuisson. Ainsi les gouttes de condensation qui coulent sur la paroi latérale intérieure du second plat tombent dans le premier plat ou sur l'anneau de liaison et non sur la portion de préhension.

Dans un mode de réalisation, l'organe de jonction est conçu pour que la condensation s'écoule et tombe à l'intérieur du premier plat de cuisson et ne soit pas retenue par ledit organe de jonction.

### Organe de jonction - sécurité

L'organe de jonction selon l'invention permet la réalisation de deux fonctions successives en tout sécurité : (1) le maintien en place du second plat en surplomb du premier plat et (2) le retrait du second plat, ledit retrait étant réalisé par le retrait de l'organe de jonction en une seule étape de manipulation.

En outre, selon un mode de réalisation, l'organe de jonction assure une isolation thermique : de manière générale, la température de la au moins une portion de préhension est plus faible que la température de la au moins une oreille de préhension, ce qui facilite la manipulation sans risques de brûlures. Ainsi, les risques de casse et de brûlures de l'utilisateur sont limités ; et le dépôt des plats sur un plan de travail, notamment de taille réduite, est facilité.

### Récipient de cuisson

Selon un deuxième aspect, l'invention concerne un récipient de cuisson comprenant un premier plat de cuisson et un second plat de cuisson comprenant chacun un bord , ledit récipient comprenant en outre un organe de jonction du premier et du second plat, tel que décrit ci-dessus. La manipulation de ce récipient de cuisson est ainsi sécurisée puisque l'organe de jonction emporte simultanément lors de son retrait le second plat de cuisson. De plus, l'utilisation de l'organe de jonction tel que précédemment décrit permet d'augmenter la capacité du récipient.

Selon un mode de réalisation, le second plat de cuisson du récipient comprend au moins une oreille de préhension s'étendant transversalement à partir du bord ou de la paroi latérale du second plat de cuisson et le premier plat de cuisson du récipient comprend au moins une oreille de préhension s'étendant transversalement à partir du bord ou de la paroi latérale du premier plat de cuisson.

En outre le récipient selon l'invention comprend un moyen d'éviter l'écoulement de condensation le long des parois extérieures du premier plat de cuisson et d'éviter la stagnation de condensation au niveau de l'organe de jonction. Ce moyen pour éviter que de la condensation ne se forme sur les parois extérieures du premier plat réside dans l'assemblage d'un second plat de cuisson retourné en surplomb d'un premier plat de cuisson sur les bords duquel est posé un organe de jonction. La disposition de l'anneau de liaison avec une première portion d'extrémité basse conformée pour s'étendre à l'intérieur de la paroi latérale du premier plat et une seconde portion d'extrémité haute conformée pour s'étendre à l'extérieur de la paroi latérale du second plat de cuisson permet d'éviter tout écoulement de condensation le long des parois extérieures du premier plat. Selon un mode de réalisation, le récipient de cuisson permet d'éviter l'écoulement de condensation le long des parois extérieures du premier plat de cuisson et d'éviter la stagnation de condensation au niveau de l'organe de jonction.

### Utilisation

Un autre objet de l'invention concerne l'utilisation dudit récipient de cuisson pour la cuisson d'aliments dans un four, notamment pour des cuissons sur tout moyen de cuisson y compris brûleur gaz ou plaque de cuisson notamment électrique, vitrocéramique ou induction, ou enceinte de cuisson y compris fours, notamment fours à infra-rouge.

### Méthode de cuisson

Un autre objet de l'invention concerne une méthode de cuisson confinée dans un four ou non confinée, caractérisée par l'assemblage, à l'aide d'un organe de jonction tel que précédemment décrit, d'un premier plat de cuisson destiné à contenir des aliments avec un second plat de cuisson destiné à servir de couvercle.

### DESCRIPTION DÉTAILLÉE

D'autres caractéristiques et avantages apparaîtront dans la description qui va suivre de plusieurs modes de réalisation d'un récipient de cuisson comprenant un organe de jonction selon l'invention. Cette description est donnée à titre d'exemples non limitatifs, en référence aux dessins annexés dans lesquels :
- la **figure 1** est une vue en perspective du récipient de cuisson selon un mode de réalisation de l'invention (mode de réalisation en surélévation du second plat par rapport au premier plat; les premier et second plats de cuisson comportant de grandes oreilles de préhension),
- la **figure 2** est une vue en perspective de l'organe de jonction et du premier plat de cuisson selon un mode de réalisation de l'invention (mode de réalisation en surélévation),
- la **figure 3** est une vue en coupe de l'intérieur du récipient de cuisson selon un mode de réalisation de l'invention (mode de réalisation en surélévation du second plat par rapport au premier plat; les premier et second plats de cuisson comportant de grandes oreilles de préhension),

- la **figure 4** est une vue en coupe depuis l'extérieur du récipient de cuisson selon un mode de réalisation de l'invention (mode de réalisation en surélévation du second plat par rapport au premier plat),
- la **figure 5** est une vue en perspective de l'organe de jonction selon un mode de réalisation de l'invention (mode de réalisation sans ergots),
- la **figure 6** est une vue en coupe de l'intérieur du récipient de cuisson selon un mode de réalisation de l'invention (mode de réalisation en surélévation du second plat par rapport au premier plat),
- la **figure 7A** est une vue en coupe de l'intérieur du récipient de cuisson selon un mode de réalisation de l'invention permettant de mettre en avant la fonction de la au moins une portion de préhension (mode de réalisation en surélévation du second plat par rapport au premier plat; les premier et second plats de cuisson comportant de grandes oreilles de préhension),
- la **figure 7B** est une vue en coupe de l'intérieur du récipient de cuisson selon un mode de réalisation de l'invention permettant de mettre en avant la fonction de la au moins une portion de préhension (mode de réalisation en surélévation du second plat par rapport au premier plat; les premier et second plats de cuisson comportant de petites oreilles de préhension),
- la **figure 8A** est une vue en perspective du récipient de cuisson selon un mode de réalisation de l'invention (mode de réalisation en surélévation du second plat par rapport au premier plat; les premier et second plats de cuisson comportant de petites oreilles de préhension),
- la **figure 8B** est une vue en perspective du récipient de cuisson selon un mode de réalisation ne faisant pas partie de l'invention (mode de réalisation en surélévation du second plat par rapport au premier plat; les premier et second plats de cuisson ne comportant pas d'oreille de préhension),
- la **figure 9** est une vue en perspective de l'organe de jonction selon un mode de réalisation de l'invention (mode de réalisation avec ergots 14),
- la **figure 10** est une vue en perspective partielle du récipient de cuisson selon un mode de réalisation ne faisant pas partie de l'invention (mode de réalisation avec ergots, en surélévation du second plat par rapport au premier plat; les premier et second plats de cuisson ne comportant pas d'oreille de préhension),
- la **figure 11** est une vue en coupe de l'intérieur du récipient de cuisson selon un mode de réalisation ne faisant pas partie de l'invention (mode de réalisation avec ergots, en surélévation du second plat par rapport au premier plat; les premier et second plats de cuisson ne comportant pas d'oreille de préhension).

### Liste des références

- 1.: Premier plat de cuisson
- 2.: Second plat de cuisson
- 3.: Organe de jonction
- 4.: Paroi de fond des plats de cuisson
- 5.: Paroi latérale des plats de cuisson
- 6.: Bord
- 7.: Oreille de préhension des plats de cuisson
- 8.: Anneau de liaison
- 9.: Première portion d'extrémité basse (extrémité basse de l'anneau de liaison)
- 10.: Deuxième portion d'extrémité haute (extrémité haute de l'anneau de liaison)
- 11.: Portion centrale de l'anneau de liaison
- 12.: Portion de préhension de l'anneau de liaison
- 13.: Rebord de la portion de préhension de l'anneau de liaison
- 14.: Ergot de l'anneau de liaison
- 100.: Récipient de cuisson

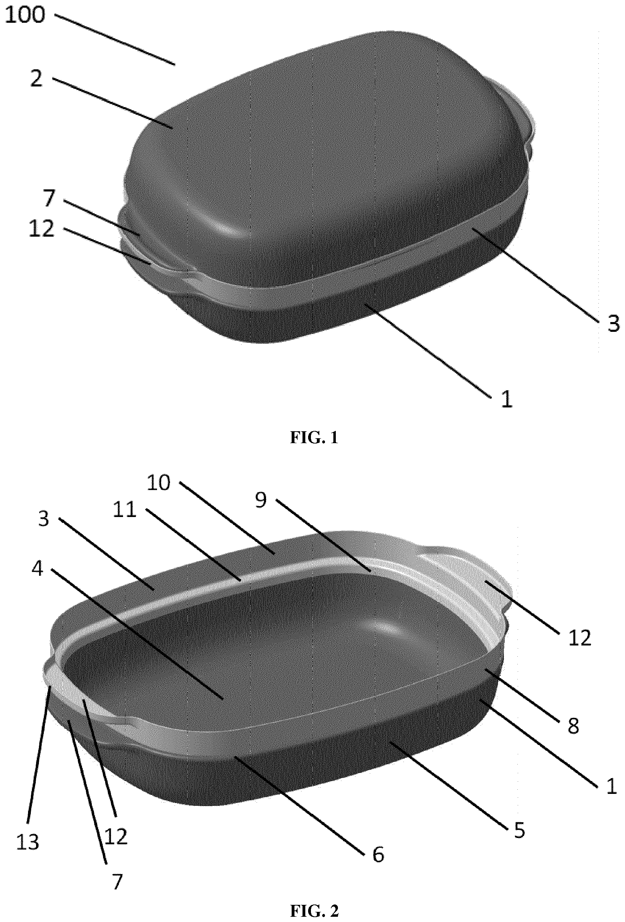

Le récipient de cuisson 100 illustré à la figure 1 comprend un premier plat 1 de cuisson et d'un second plat 2 de cuisson relié au premier plat 1 par l'intermédiaire d'un organe de jonction 3.

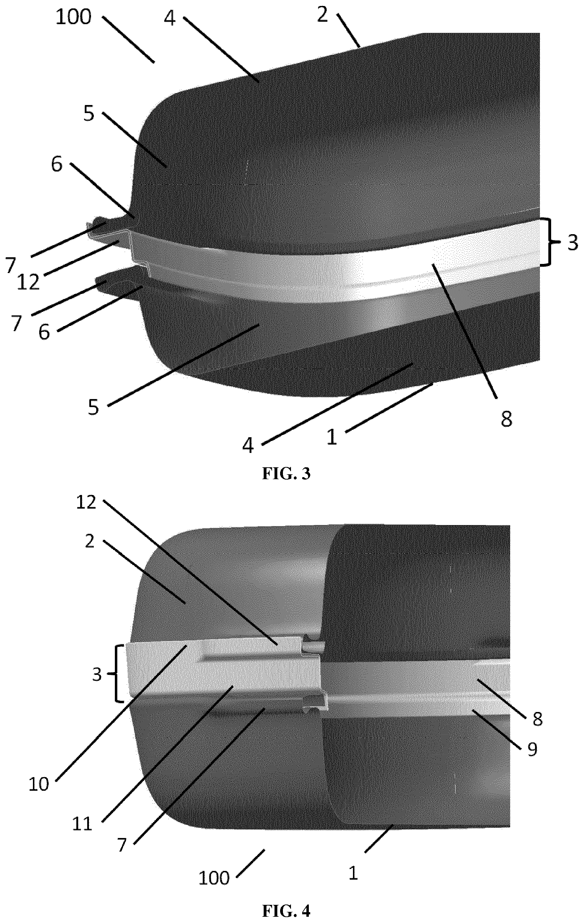

Comme illustré aux figures 2 et 3, les premier et deuxième plats 1,2 de cuisson comprennent chacun une paroi de fond 4, une paroi latérale 5 et un bord 6 délimitant une périphérie annulaire du plat 1,2. La paroi latérale 5 s'étend depuis la paroi de fond 4 jusqu'au bord 6. Une oreille de préhension 7 s'étend transversalement à la paroi latérale 5 à partir du bord 6 de chacun des plats 1,2.

Comme illustré aux figures 3 et 4, chacun des premier et second plats 1,2 de cuisson peuvent comprendre deux oreilles de préhension 7 de part et d'autre du plat, facilitant la manipulation du récipient de cuisson 100 et du second plat 2, étant précisé que seule une extrémité est représentée sur la figure 3.

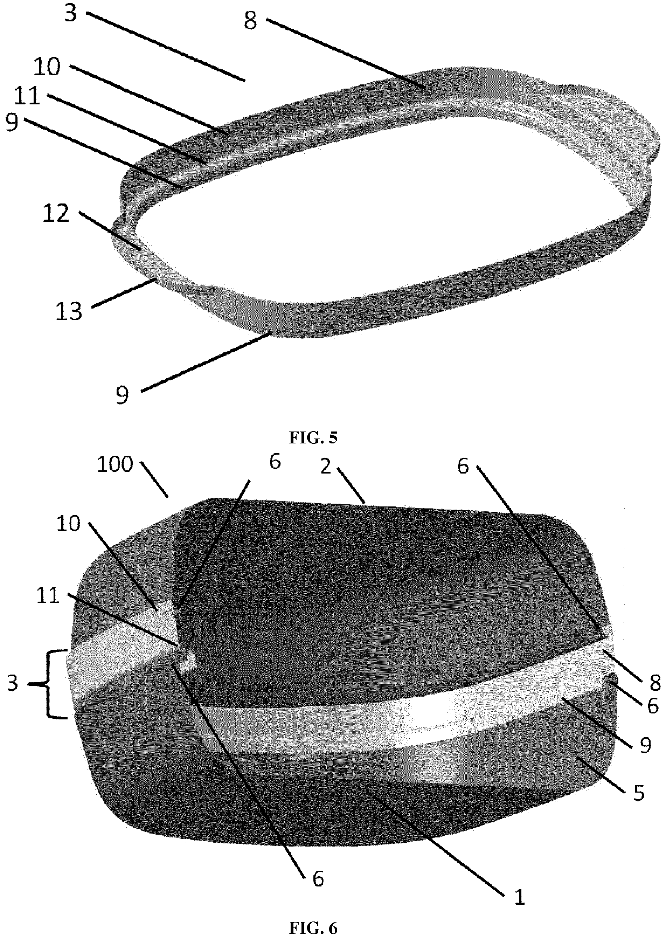

L'organe de jonction 3 est interposé entre le premier 1 et le deuxième plat 2. Comme illustré à la figure 4, il comprend un anneau de liaison 8 conformé pour positionner en surplomb du second plat 2 le premier plat 1 et présente une forme générale annulaire (cf. figure 5).

Cet anneau de liaison 8 comprend notamment une première portion d'extrémité basse 9 conformée pour s'étendre à l'intérieur de la paroi latérale 5 du premier plat 1 de cuisson ainsi qu'une deuxième portion d'extrémité haute 10 conformée pour s'étendre à l'extérieur du second plat 2 de cuisson. Une portion centrale 11 reliant les première et deuxième portions d'extrémité 9,10 est agencée de manière à être positionné entre les bords 6 des premier et second plats 1,2 de cuisson. L'organe de jonction 3 permet de créer une emboîture entre le premier plat 1 et le deuxième plat 2 et évite le glissement du bord 6 du second plat 2 sur le bord 6 du premier plat 1 ce qui sécurise l'utilisation du récipient de cuisson 100 (cf. figures 4, 5 et 6).

Comme illustré aux figures 1, 2, 3, 4 et 5, 7a, 7b, 8a, 8b, 9 et 10, l'organe de jonction 3 comprend également au moins une portion de préhension 12 s'étendant depuis l'anneau de liaison 8, transversalement depuis la deuxième portion d'extrémité haute 10 et dans le prolongement de ladite deuxième portion d'extrémité haute 10, dans la partie haute de l'anneau 8 comme montré sur les figures 2, 4, 5 et 6. Cette portion de préhension 12 présente une forme générale de coquille pour coopérer par complémentarité de forme avec une oreille de préhension 7 du second plat de cuisson 2 de manière à ce que la saisie de l'organe de jonction 3 par le biais des portions de préhension 12 emporte simultanément le second plat 2. De plus, cette forme de coquille évite tout écoulement de la condensation à l'extérieur des plats 1,2. Ladite forme de coquille est constituée par d'un rebord 13 qui définit en son centre un logement. De la sorte, le second plat 2 et l'organe de jonction 3 peuvent être retirés ensembles, en une seule étape, ce qui facilite l'utilisation du récipient de cuisson 100.

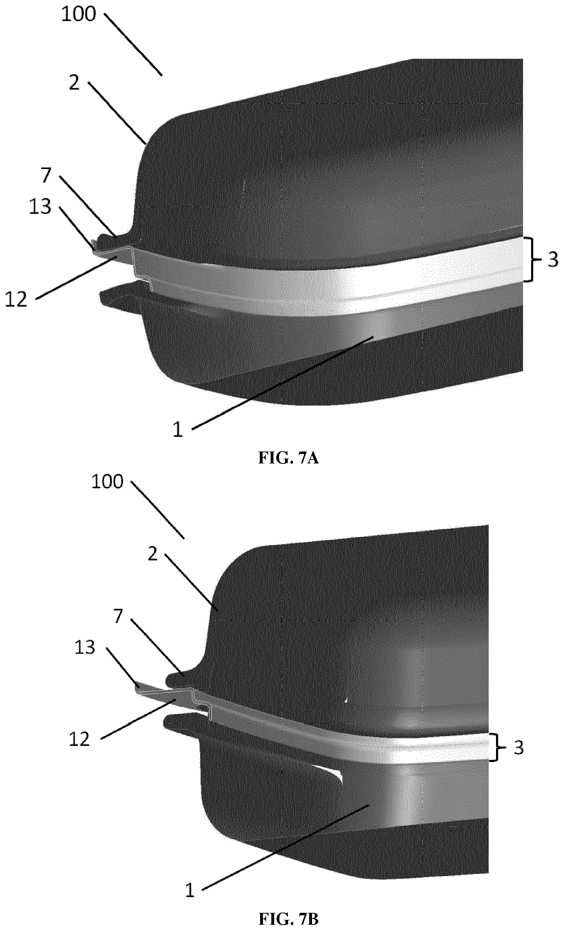

Selon une première variante illustrée à la figure 7A, les portions de préhension 12 de l'organe de jonction 3 ont une taille adaptée et épousent la forme des oreilles de préhensions 7 du second plat de cuisson 2.

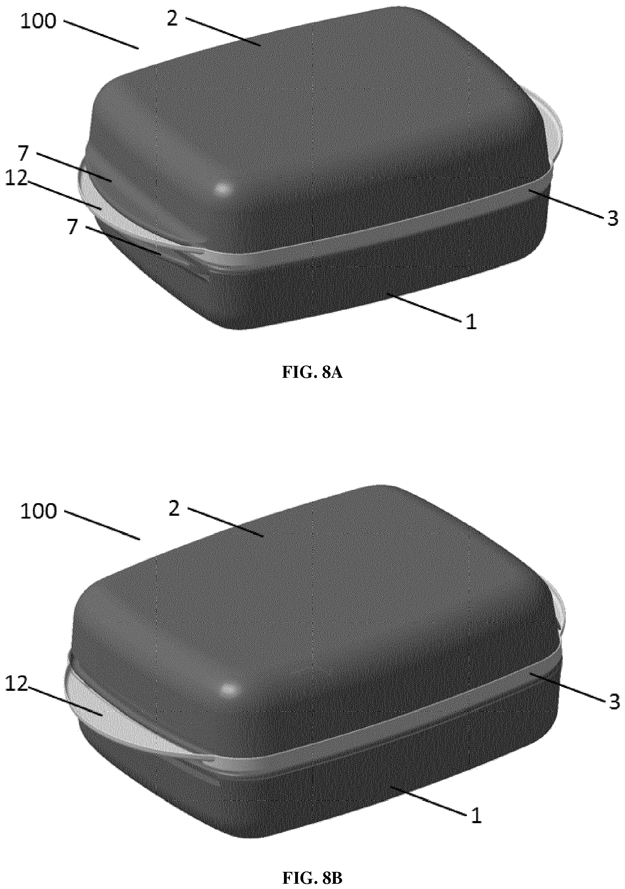

Selon une seconde variante illustrée aux figures 7B et 8A, les portions de préhension 12 de l'organe de jonction 3 ont une taille supérieure aux oreilles de préhension 7 du second plat 2 sans modifier le maintien de ces premier et second plats de cuisson 1,2 et le retrait du second plat 2 conjointement à l'organe de jonction 3. Ainsi, le retrait du second plat 2 par l'intermédiaire de l'organe de jonction 3 est facilité.

Selon une troisième variante ne faisant pas partie de l'invention illustrée à la figure 8B, en l'absence d'oreilles de préhension sur les premier et second plats 1,2 de cuisson, l'organe de jonction 3 muni des portions de préhension 12 devient indispensable pour soulever le second plat 2 de cuisson et donc ouvrir le récipient de cuisson 100.

Comme illustrée à la figure 7A, la portion de préhension 12 de l'organe de jonction 3 est conformée pour recevoir une oreille de préhension 7 du second plat 2 et comprend en outre une portion de rebord 13 qui épouse la forme du bord de l'oreille de préhension 7 du second plat 2. Ainsi la prise de la portion de préhension 12 de l'organe de jonction 3 emporte prise de l'oreille de préhension 7 du second plat 2. De plus, la portion de préhension 12 s'étend transversalement à la seconde portion d'extrémité haute 10 de l'organe de jonction 3 et dans le prolongement de celle-ci (cf. figure 5) de sorte que la portion de préhension 12 surélève l'oreille de préhension 7 du second plat 2 de la hauteur de la portion centrale 11. Cette configuration facilite la prise en main de la portion de préhension 12, notamment comme illustrée aux figures 1, 3, 4, 7A et 7B lorsque le premier plat 1 comprend au moins une oreille de préhension 7 disposée en regard de celle du second plat 2.

De plus cette surélévation du second plat 2 permet d'augmenter la capacité de cuisson dans le récipient de cuisson 100.

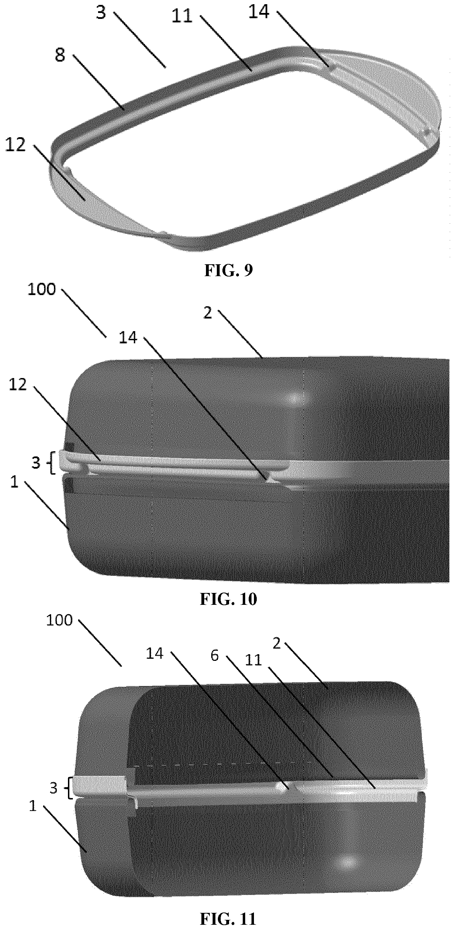

Dans une variante ne faisant pas partie de l'invention illustrée dans la configuration des figures 8B et 10, les plats 1,2 ne présentent pas d'oreille de préhension 7, l'organe de jonction 3 peut toutefois permettre une surélévation entre les premier et second plats de manière à permettre l'augmentation de la capacité de cuisson. Dans ce cas, où le second plat n'a pas d'oreille de préhension, ladite surélévation est obtenue par des ergots 14 qui s'étendent verticalement à partir de la portion centrale 11 (cf. figure 9 et 11).

Ainsi, la présente invention propose un organe de jonction 3 permettant de maintenir un second plat 2 de cuisson retourné en surplomb d'un premier plat de cuisson 1, et/ou de saisir en une opération le second plat 2 et l'organe de jonction 3 et/ou d'augmenter la capacité de cuisson du récipient de cuisson formé par les premier et second plats 1,2 de cuisson.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Organe de jonction (3) pour relier un premier plat (1) de cuisson et un second plat (2) de cuisson, chacun des premier et deuxième plats (1,2) de cuisson présentant chacun un bord (6), comprenant une paroi de fond (4), sensiblement horizontale, et une paroi latérale (5), sensiblement verticale, s'étendant depuis la paroi de fond (4) jusqu'au bord (6), le premier plat de cuisson présentant 0, 1, ou 2 oreilles de préhension et le second plat de cuisson présentant 1 ou 2 oreilles de préhension,
**caractérisé en ce que** l'organe de jonction (3) comprend un anneau de liaison (8) conformé pour positionner le bord (6) du second plat (2) de cuisson en surplomb du bord (6) du premier plat (1) de cuisson, et au moins une portion de préhension (12) s'étendant en saillie depuis l'anneau de liaison (8), ledit anneau de liaison (8) comprenant :
une première portion d'extrémité basse (9) conformée pour s'étendre à l'intérieur de la paroi latérale (5) du premier plat (1) de cuisson,
une seconde portion d'extrémité haute (10) conformée pour s'étendre à l'extérieur de la paroi latérale (5) du second plat (2) de cuisson, et
une portion centrale (11) reliant les première et seconde portions d'extrémité (9,10) et agencée pour être positionner entre les bords (6) des premier et second plats (1,2) de cuisson,
**caractérisé en outre en ce que** ladite au moins une portion de préhension (12) de l'organe de jonction (3) s'étend transversalement depuis la deuxième portion d'extrémité haute (10) et dans le prolongement de la deuxième portion d'extrémité haute (10) et **en ce que** ladite au moins une portion de préhension (12) est conformée pour coopérer par complémentarité de forme avec au moins une oreille de préhension (7) du second plat (2) de cuisson.

2. Organe de jonction (3) selon la revendication **1, caractérisé en ce que** ladite au moins une portion de préhension (12) de l'organe de jonction (3) est conformée de sorte que la prise de ladite au moins une portion de préhension (12) de l'organe de jonction (3) emporte simultanément le second plat de cuisson (2).

3. Organe de jonction (3) selon la revendication **1** ou **2**, **caractérisé en ce que** ladite au moins une portion de préhension (12) de l'organe de jonction (3) est conformée pour recevoir au moins une oreille de préhension (7) liée à un bord du second plat de cuisson (2).

4. Organe de jonction (3) selon l'une des revendications **1** à **3, caractérisé en ce que** ladite au moins une portion de préhension (12) de l'organe de jonction (3) comprend au moins un rebord (13).

5. Organe de jonction (3) selon la revendication **4, caractérisé en ce que** ledit au moins un rebord (13) définit en son centre un logement dimensionné pour recevoir et stabiliser au moins une oreille de préhension liée à un bord du second plat de cuisson.

6. Organe de jonction (3) selon l'une des revendications **1** à **5, caractérisé en ce que** l'anneau de liaison (8) est conformé pour surélever le bord (6) du second plat (2) de cuisson par rapport au bord (6) du premier plat (1).

7. Organe de jonction (3) selon la revendication **6, caractérisé en ce que** ladite surélévation est obtenue par des ergots (14) aménagés le long de l'anneau de liaison (8).

8. Organe de jonction (3) selon l'une des revendications **1** à **7, caractérisé en ce que** l'anneau de liaison (8) est monobloc et formé à partir d'un métal ou d'un alliage métallique.

9. Organe de jonction (3) selon l'une des revendications **1** à **8, caractérisé en ce que** l'organe de jonction est monobloc et formé à partir d'un métal ou d'un alliage métallique.

10. Récipient de cuisson (100) **caractérisé en ce qu'**il comprend un premier plat (1) de cuisson et un second plat (2) de cuisson comprenant chacun un bord (6) ; et un organe de jonction (3) selon l'une des revendications **1** à **9.**

11. Récipient de cuisson (100) selon la revendication **10, caractérisé en ce que** le second plat (2) de cuisson comprend au moins une oreille de préhension (7) s'étendant transversalement à partir du bord (6) ou de la paroi latérale (5) du second plat (2) de cuisson et **en ce que** le premier plat (1) de cuisson comprend au moins une oreille de préhension (7) s'étendant transversalement à partir du bord (6) ou de la paroi latérale (5) du premier plat (1) de cuisson.

12. Récipient de cuisson (100) selon l'une des revendications **10** ou **11, caractérisé en ce que** le premier plat (1) de cuisson et le second plat (2) de cuisson sont en verre, en métal, en alliage métallique, en fonte ou en céramique.

13. Récipient de cuisson (100) selon l'une des revendications **10** à **12 caractérisé en ce qu'**il comprend un moyen d'éviter l'écoulement de condensation le long des parois extérieures du premier plat de cuisson (1) et d'éviter la stagnation de condensation au niveau de l'organe de jonction.

## Patentansprüche

1. Verbindungsorgan (3) zum Anbinden von einem ersten Kochtopf (1) und einem zweiten Kochtopf (2), wobei jeder des ersten und zweiten Kochtopfs (1, 2) jeweils einen Rand (6) aufweist, eine im Wesentlichen horizontale Bodenwand (4) und eine im Wesentlichen vertikale Seitenwand (5) umfassend, die sich von der Bodenwand (4) bis zum Rand (6) erstreckt, wobei der erste Kochtopf 0, 1 oder 2 Greifhenkel aufweist und der zweite Kochtopf 1 oder 2 Greifhenkel aufweist,
**dadurch gekennzeichnet, dass** das Verbindungsorgan (3) einen Anbindungsring (8) umfasst, der geformt ist, um den Rand (6) des zweiten Kochtopfs (2) überhängend vom Rand (6) des ersten Kochtopfs (1) zu positionieren, und mindestens einen Greifabschnitt (12), der sich überstehend aus dem Anbindungsring (8) erstreckt, wobei der Anbindungsring (8) umfasst:
einen ersten unteren Endabschnitt (9), der geformt ist, um sich innen an der Seitenwand (5) des ersten Kochtopfs (1) zu erstrecken,
einen zweiten oberen Endabschnitt (10), der geformt ist, um sich außen an der Seitenwand (5) des zweiten Kochtopfs (2) zu erstrecken, und
einen zentralen Abschnitt (11), der den ersten und zweiten Endabschnitt (9, 10) anbindet und angeordnet ist, um zwischen den Rändern (6) des ersten und zweiten Kochtopfs (1, 2) positioniert zu werden,
weiter **dadurch gekennzeichnet, dass** sich der mindestens eine Greifabschnitt (12) des Verbindungsorgans (3) quer von dem zweiten oberen Endabschnitt (10) und in der Verlängerung des zweiten oberen Endabschnitts (10) erstreckt, und dadurch, dass der mindestens eine Greifabschnitt (12) geformt ist, um formschlüssig mit mindestens einem Greifhenkel (7) des zweiten Kochtopfs (2) zusammenzuwirken.

2. Verbindungsorgan (3) nach Anspruch **1, dadurch gekennzeichnet, dass** der mindestens eine Greifabschnitt (12) des Verbindungsorgans (3) derart geformt ist, dass das Ergreifen des mindestens einen Greifabschnitts (12) des Verbindungsorgans (3) gleichzeitig den zweiten Kochtopf (2) mitnimmt.

3. Verbindungsorgan (3) nach Anspruch **1** oder **2, dadurch gekennzeichnet, dass** der mindestens eine Greifabschnitt (12) des Verbindungsorgans (3) geformt ist, um mindestens einen Greifhenkel (7) aufzunehmen, der an einem Rand des zweiten Kochtopfs (2) angebunden ist.

4. Verbindungsorgan (3) nach einem der Ansprüche **1** bis **3, dadurch gekennzeichnet, dass** der mindestens eine Greifabschnitt (12) des Verbindungsorgans (3) mindestens eine Kante (13) umfasst.

5. Verbindungsorgan (3) nach Anspruch **4, dadurch gekennzeichnet, dass** die mindestens eine Kante (13) in ihrem Zentrum eine Aufnahme definiert, die bemessen ist, um mindestens einen Greifhenkel, der an einem Rand des zweiten Kochtopfs angebunden ist, aufzunehmen und zu stabilisieren.

6. Verbindungsorgan (3) nach einem der Ansprüche **1** bis **5, dadurch gekennzeichnet, dass** der Anbindungsring (8) geformt ist, um den Rand (6) des zweiten Kochtopfs (2) im Verhältnis zu dem Rand (6) des ersten Kochtopfs (1) anzuheben.

7. Verbindungsorgan (3) nach Anspruch **6, dadurch gekennzeichnet, dass** die Anhebung durch Klauen (14) erhalten wird, die entlang des Anbindungsringes (8) eingerichtet sind.

8. Verbindungsorgan (3) nach einem der Ansprüche **1** bis **7, dadurch gekennzeichnet, dass** der Anbindungsring (8) in einem Stück ist und aus einem Metall oder einer Metalllegierung gebildet ist.

9. Verbindungsorgan (3) nach einem der Ansprüche **1** bis **8, dadurch gekennzeichnet, dass** das Verbindungsorgan in einem Stück ist und aus einem Metall oder einer Metalllegierung gebildet ist.

10. Kochgefäß (100), **dadurch gekennzeichnet, dass** es einen ersten Kochtopf (1) und einen zweiten Kochtopf (2) umfasst, die jeweils einen Rand (6) umfassen; und ein Verbindungsorgan (3) nach einem der Ansprüche **1** bis **9.**

11. Kochgefäß (100) nach Anspruch **10, dadurch gekennzeichnet, dass** der zweite Kochtopf (2) mindestens einen Greifhenkel (7) umfasst, der sich quer von dem Rand (6) oder der Seitenwand (5) des zweiten Kochtopfs (2) erstreckt und dadurch, dass der erste Kochtopf (1) mindestens einen Greifhenkel (7) umfasst, der sich quer von dem Rand (6) oder der Seitenwand (5) des ersten Kochtopfs (1) erstreckt.

12. Kochgefäß (100) nach einem der Ansprüche **10** oder **11, dadurch gekennzeichnet, dass** der erste Kochtopf (1) und der zweite Kochtopf (2) aus Glas, aus Metall, aus Metalllegierung, aus Guss oder aus Keramik sind.

13. Kochgefäß (100) nach einem der Ansprüche **10** bis **12, dadurch gekennzeichnet, dass** es ein Mittel zum Vermeiden des Auslaufens von Kondensation entlang der Außenwände des ersten Kochtopfs (1) und zum Vermeiden des Stagnierens von Kondensation im Bereich des Verbindungsorgans umfasst.

## Claims

1. Junction organ (3) to connect a first (1) baking dish and a second (2) baking dish, each of the first and second (1,2) baking dish having each an edge (6), including a bottom wall (4), substantially horizontal, and a side wall (5), substantially vertical, extending from the bottom wall (4) to the edge (6), the first baking dish having 0, 1, or 2 grip ears and the second baking dish having 1 or 2 grip ears, **characterised in that** the connecting member (3) includes a connecting ring (8) conformed to position the edge (6) of the second baking dish (2) overhanging the edge (6) of the first baking dish (1) and at least one gripping portion (12) extending protruding from the connecting ring (8), said connecting ring (8) comprising:
a first low end portion (9) conformed to extend inside of the side wall (5) of the first baking dish (1), a second high end portion (10) conformed to extend outside the side wall (5) the second baking dish (2) and a central portion (11) connecting the first and second high end portions (9.10) and arranged to be positioned between the edges (6) of the first and second baking dish (1.2); further **characterised in that** at least one portion of the grip (12) of the junction organ (3) extends transversely from the second high end portion (10) and in the extension of the second high end portion (10) and in so far as said at least one portion of grip (12) is conformed to cooperate by complementarity of form with at least one ear of grip (7) of the second dish (2) of cooking.

2. Junction organ (3) according to claim **1, characterised in** so far as the less a portion of the grip (12) of the junction organ (3) is so conformed that at least one portion of the grip (12) of the junction organ be taken (3) simultaneously takes away the second baking dish (2).

3. Junction organ (3) according to claim **1** or **2, characterised in** so far as the said at least one grip portion (12) of the junction organ (3) is conformed for receive at least one grip ear (7) tied to one edge of the second baking dish (2).

4. Junction organ (3) according to claims **1** to **3, characterised in** so far as said at least a portion of grip (12) a grip portion of the junction organ (3) has at least one edge (13).

5. Junction organ (3) according to claim **4; characterised in that** said at least one edge (13) defines in its centre a housing sized to receive and stabilize at least one grip ear tied to one edge of the second baking dish.

6. Junction organ (3) according to one of claims **1** to **5, characterised in that** the connecting ring (8) is conformed to raise the edge (6) of the second baking dish (2) from the edge (6) of the first baking dish (1).

7. Junction organ (3) according to claim **6, characterised in that** the above-elevation is obtained by pins (14) arranged along the connecting ring (8).

8. Junction organ (3) according to one of claims **1** to **7, characterised in that** the connecting ring (8) is monobloc and formed from a metal or metal alloy.

9. Junction organ (3) according to claims **1** to **8, characterised in that** the connecting member is monobloc and formed from a metal or metal alloy.

10. Cooking container (100) **characterised in that** it consists of a first (1) baking dish and a second (2) baking dish each consisting of an edge (6); and a junction organ (3) according to one of claims **1** to **9.**

11. Cooking container (100) according to claim **10, characterised in that** the second cooking dish (2) comprises at least one gripping ear (7) extending transversely from the edge (6) or the side wall (5) of the second baking dish (2) cooking and **in that** the first baking dish (1) includes at least one gripping ear (7) extending transversely from the edge (6) or side wall (5) of the first baking dish (1).

12. Cooking container (100) according to one of claims **10** or **11, characterised in that** the first baking dish (1) and the second baking dish (2) are made of glass, metal, metal alloy, cast iron or ceramic.

13. Cooking container (100) according to one of claims **10** to **12 characterised in that** it includes a means of avoiding the flow of condensation along the outer walls of the first baking dish (1) and avoid condensation stagnation at the junction organ.
